# EUROPEAN PATENT SPECIFICATION

(11) **EP 3 477 827 B1**
(45) Date of publication and mention of the grant of the patent: **10.03.2021**
(21) Application number: 18191648.7
(22) Date of filing: 30.08.2018
(51) Int. Cl.: H02K 7/12, H02K 17/32

(54) **ELECTRIC MOTOR WITH A MULTI-PROFILE, MULTI-SECTIONAL, SLIDING ROTOR**
ELEKTROMOTOR MIT EINEM MEHRTEILIGEN VERSCHIEBELÄUFER MIT MEHREREN PROFILEN
MOTEUR ÉLECTRIQUE AVEC ROTOR COULISSANT MULTI-PROFIL ET MULTI-SECTION

(30) Priority: 25.10.2017 BG 11260817
(43) Date of publication of application: 01.05.2019
(73) Proprietor: Raykov, Petar Raykov, Municipality Gabrovo (BG)
(72) Inventor: Raykov, Petar Raykov, Municipality Gabrovo (BG)
(74) Representative: Benatov, Samuil Gabriel

(56) References cited:
- DE-C- 695 165
- GB-A- 965 642
- US-A- 4 877 987

## Description

### Technical feed

The electric motor is designed to drive hoisting mechanisms of hoists / cranes and will find application in industry. A major feature of these electric motors is that they are most often three-phase, asynchronous and include a braking mechanism.

### Background of the invention

It is known from US4877987 an electric motor consisting of a housing at one end of which is mounted a front bearing shield and at the other end a rear bearing shield with a mounted brake mechanism therein. Inside the housing is mounted stator with stator coil and rotor with squirrel-cage windings. Both elements with a fully conical shape. The rotor is slidably mounted on a shaft and is connected at one end to the braking mechanism, and at the other one to the front bearing shield, by means of a spring resting on the front of the conical shaped rotor. Bearings are mounted around the shaft at the front and rear bearing shields.

A major advantage of this design is the efficient braking mechanism with a high level of reliability. Its action is accomplished by the axial projection of the electromagnetic forces occurring between the stator and the rotor when feeding the stator coil. Under this projection the rotor moves in the axial direction and compresses the spring, releasing the brake from the braking shield. When the power is turned off, the forces disappear and the rotor returns to the starting position until the brake is closed.

A major drawback of the fully cone-shaped rotor motors is that, if a larger power motor is required, limitations on the length of the rotor and stator packets occur. The limitations are due to the deviation of the parameters of the cone end diameters from the middle section for which the electric motor is calculated and designed. In order to achieve the set higher power, an increase in the diameter of the middle section is required. This leads to a significant increase in the overall dimensions of the electric motor. Significant gauges drive design difficulties, increased nomenclature of materials and components, tooling and consequently costly production.

One of the typical drawbacks of cone rotor motors is the large starting current. This, on the one hand, is due to the inefficiency of these motors, as electric machines, and on the other, to the variable air gap between the rotor and the stator as a result of the axial displacement of the rotor. Furthermore, in the course of wear of the friction elements of the braking mechanism, the axial stroke increases, respectively the initial air gap increases, driving more starting current.

Another significant drawback of the fully cone rotor motors is the reduced switch speed of the brake mechanism, as a result of the significant residual magnetization of the rotor after switching off the power to the stator coil. Due to the significant volume of active materials in the rotor package, the rotor current decreases smoothly, and with it the axial force, providing the action to the braking mechanism. This disadvantage results in restrictions on the use of these electric motors in combination with frequency drives, which are increasingly entering the crane industry, replacing the use of double-speed electric motors. Well known in the field are cylindrical rotor and stator electric motors having a separate braking mechanism consisting of a DC magnet, which drives frictional elements through springs (DE695165). These electric motors are considerably more efficient electric machines than electric motors with a fully cone rotor, since the design parameters of their mean diameter cross section are invariable for each of the other diameter cross sections.

The deficiencies of this type of electric motors are related to the need of use of a DC magnet for the brake mechanism, thus driving a design of a separate DC circuit with a rectifier. This makes the motors more complicated, with low reliability and safety, especially in heavy duty conditions that bring higher requirements to the DC circuit and most of all to the rectifier.

Another electric motor with axially displaceable rotor and a breaking mechanism is known from GB 965 642 A. This squirrel-cage motor has a normal cylindric laminated stator core and a normal cylindric laminated rotor core of less axial length than the stator core. In the free space in the stator bore resulting from the shortened rotor two conical laminated bodies are located, one of said bodies with conical bore being fixed to the stator and the other one of the said bodies with conical outer shape being fixed to the rotor shaft, both bodies forming between them the conical air gap. The conical rotor body has no coil/windings and is a passive element that does not create neither axial force nor torque.

### Summary of the invention

It is an object of the invention to provide an asynchronous electric motor whose construction allows to combine the positive features of the two main concepts of hoisting electric motors described above and to eliminate their disadvantages. In particular, a combination of a high-efficiency electric machine and an efficient braking mechanism with a high degree of reliability.

The object is achieved by an asynchronous electric motor with a multi-profile, multi-sectional, sliding rotor according to the invention, comprising a housing with a front bearing shield at one end and at the other end a rear bearing shield and a brake mechanism including at least a brake with a friction element and a braking shield, a stator with a coil situated in the housing, in said stator is mounted a squirrel-cage rotor with a shaft, and radial bearings, which are fixed around the shaft and positioned in the bearing shields. The radial bearings allow axial displacement of the shaft with the rotor relative to the stator. Whereby the rotor is coupled at one end with the braking mechanism. According to the invention, the rotor includes two or more rotor sections longitudinally disposed, at least one of which is conical, with a small cone diameter directed towards the front bearing shield, and at least one of the sections is cylindrical. The stator is partially conical and also has two or more sections corresponding to the number, shape and position of the rotor sections. The coil of the stator is common to all its sections and is multi-profile, corresponding to the size, shape and dimensions of the stator.

According to a preferred embodiment of the invention, the braking mechanism is attached to one end of the shaft and is adapted to be actuated by a spring mounted around the other end of the shaft, said spring being compressed between the face of the rotor cone section at one end and an axial bearing located in the front bearing shield, the axial bearing being adapted to limit the axial movement of the rotor shaft.

It is possible that the rotor sections have longitudinal slots for the rotor squirrel-cage windings of different number and profile for each section.

The advantages achieved are due to the new elements of the rotor and the stator as mentioned above, namely:
- Cylindrical section providing high efficiency with invariable parameters along the entire length. This solves the power increase limitation of the electric motor and allows realization of a range of electric motors of different power in one diameter by corresponding increase of the length of the cylindrical section.
- A short conical section with a considerably increased cone angle to provide the required axial force for compression of the brake spring. The switch speed of the braking mechanism is increased due to the significant decrease in the volume of active materials of the axial force-producing part of the rotor, respectively remaining magnetized after disconnection of the stator winding supply.

The invention allows to reduce the influence of the variable air gap on the starting current. The air gap of the cone rotor and stator sections varies as a result of the axial rotor movement while the air gap of the cylindrical rotor and stator sections remains constant. Due to the fact that the air gap in the cone section is only a part of the total air gap, the proposed design ensures that the influence of the variable air gap on the starting current is reduced.

### Brief description of the drawings

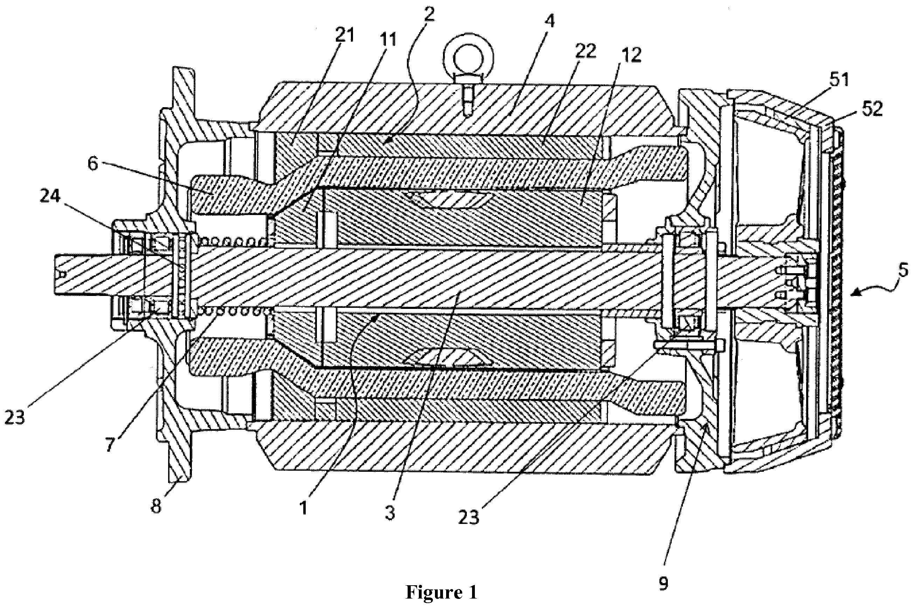

In more detail, the electric motor according to the invention is illustrated by a preferred embodiment, given as a non-limiting example of the invention, with reference to the accompanying figure, in which a longitudinal section of an exemplary embodiment of the electric motor is given.

### Example embodiment of the invention

In an exemplary embodiment shown in the figure, the asynchronous electric motor according to the invention comprises a squirrel-cage rotor 1 with a shaft 3 and a stator 2 with a stator coil 6 connected to a housing 4 as well as a braking mechanism 5 comprising at least a brake with a friction element 51 and a braking shield 52.

According to the invention, the rotor 1 comprises longitudinally situated two or more rotor sections, at least one of which is conical 11 and at least one cylindrical 12. The rotor sections have slots for the squirrel-cage windings, which can be of different number and profile. The shaft 3 of the rotor 1 is supported on radial bearings 23, which provides for the longitudinal displacement of the rotor. The stator 2 also has two or more sections corresponding to the shape and position of the sections 11, 12 of the rotor 1. As shown in the figure, one stator section 21 has a conical surface corresponding to the conical section 11 of the rotor 1 and the other stator section 22 has a cylindrical surface corresponding to the cylindrical section of the rotor 12. The stator has a coil 6 which is common to all of its sections 21, 22. The stator coil 6 is multi-profile and corresponds in shape to the shape of the stator 2.

The design, sizes and cone angles of the stator and rotor sections, and more particularly their influence on the axial force between the rotor and the stator, are known in the state of the technics [Hoist Electric Motors - D.A. Rachev, Technique 1980, Sofia].

The braking mechanism also includes a spring 7 around a part of the shaft 3. The spring is compressed between the end of the conical section of the rotor 11 and an axial bearing 24 to the front bearing shield 8 of the housing 4. The axial bearing is adapted to limit the axial movement of the shaft 3 of the rotor 1 by means of a spring 7. The opposite end of the rotor 1 is fixed to the braking mechanism 5. In the embodiment shown in the figure, the shaft 3 of the rotor 1 is connected to the braking mechanism 5, but other possible constructions are known in the state of technics. The braking mechanism 5 is of a known type.

Upon feeding voltage to the stator coil 6, electromagnetic attraction forces arise between the stator 2 and the rotor 1. Due to the cone shape of the rotor 11 and the stator sections 21, the electromagnetic force between the rotor and the stator therein has an axial projection which is in function with the cone angle. When feeding the stator coil of the motor, the axial pulling force between the rotor 1 and the stator 2 moves the rotor 1 in axial direction by compressing the spring 7. The axial displacement is provided by supporting the rotor shaft on radial bearings. By this axial motion, the brake is released as the rotor 1 pulls it off. When the power is switched off, the axial force disappears, the spring 7 is released and under its influence the rotor 1 is pushed back to the brake engagement in the contact between the friction element 51 and the braking shield 52 of the braking mechanism 5.

The reference numbers of the technical features are included in the claims solely for the purpose of increasing the intelligibility of the claims and, therefore, these reference numbers have no restrictive effect on the interpretation of the elements designated by these reference numbers.

## Claims

1. An asynchronous electric motor with a multi-profile, multi-section, sliding rotor comprising a housing (4) at one end of which is mounted a front bearing shield (8) and at the other end there is a rear bearing shield (9) and a brake mechanism (5) including at least a brake with a friction element (51) and a braking shield (52), a stator (2) with a coil (6) mounted in the housing, in which stator is mounted a squirrel-cage rotor (1) with a shaft (3), supported on radial bearings (23) positioned in the bearing shields, where the radial bearings (23) allow axial displacement of the shaft (3) with said rotor (1) relative to the stator (2), wherein the rotor (1) is connected at one end to the braking mechanism (5), wherein said rotor (1) comprises two or more rotor sections longitudinally disposed, at least one of which is conical (11), with a small cone diameter directed towards the front end bearing shield, and at least one of the rotor sections is cylindrical (12), and the stator (2) is partially conical and also has two or more sections (21, 22) corresponding to the number, shape and position of the sections (11, 12) of the rotor (1), wherein the coil (6) of the stator (2) is common to all its sections (21, 22) and is multi-profile, corresponding to the profile of the stator (2).

2. An electric motor according to claim 1, **characterized in that** the braking mechanism (5) is attached to one end of the shaft (3) and is adapted to be actuated by a spring (7) mounted around the other end of the shaft (3) of the rotor (1), said spring being compressed between one side of the conical section (11) of the rotor (1) and an axial bearing (24), located in the front bearing shield (8), wherein the axial bearing (24) being adapted to limit the axial movement of the shaft (3) of the rotor (1).

3. An electric motor according to claim 1, **characterized in that** the rotor sections (11 and 12) of the rotor (1) have longitudinal slots for the squirrel-cage rotor windings of different number and profile for each section.

## Patentansprüche

1. Asynchroner Elektromotor mit mehrprofiligem, mehrteiligem Gleitrotor einschließlich Gehäuse (4), an einem Ende ist eine vordere Lagerabschirmung (8) angebracht, und am anderen Ende befindet sich eine hintere Lagerabschirmung (9) und ein Bremsmechanismus (5), der mindestens eine Bremse mit einem Reibungselement umfasst (51) und ein Bremsschild (52), ein Stator (2) mit einer im Gehäuse montierten Spule (6), in dem ein Käfigrotor (1) mit einer Welle (3) montiert ist, und um die Welle montierte Radiallager (23), mit Lage in den Lagerschildern, wobei die Welle (3) des Rotors (1) in den Radiallagern (23) montiert ist, mit der Möglichkeit einer axialen Bewegung der Welle mit dem Rotor (1) gegenüber dem Stator (2), wobei der Rotor (1) an einem Ende mit dem Bremsmechanismus (5) verbunden ist, wobei der Rotor (1) in Längsrichtung angeordnete zwei oder mehr Rotorabschnitte enthält, mindestens eine davon ist konisch (11), mit einem kleinen Kegeldurchmesser in Richtung des vorderen Lagerschilds, und mindestens einer der Rotorabschnitte ist zylindrisch (12), und der Stator (2) ist teilweise konisch geformt und hat auch zwei oder mehr Abschnitte (21, 22), entsprechend der Anzahl, Form und Position der Abschnitte (11, 12) des Rotors (1), wobei die Wicklung (6) des Stators (2) allen seinen Abschnitten (21, 22) gemeinsam ist und ein Mehrfachprofil aufweist, das dem Profil des Stators (2) entspricht.

2. Elektromotor nach Anspruch 1, **dadurch gekennzeichnet, dass** der Bremsmechanismus (5) an einem Ende der Welle (3) angebracht ist und durch eine Feder (7) betätigt werden kann, die um das andere Ende der Welle (3) des Rotors (1) angebracht ist, angelehnt mit einer Seite auf der Vorderseite des konischen Abschnitts (11) des Rotors (1) und mit der anderen Seite an das Axiallager (24), mit einer Lage im vorderen Lagerschild (8), indem das Axiallager (24) angepasst ist, die axiale Bewegung der Welle (3) des Rptors (1) zu begrenzen.

3. Elektromotor nach Anspruch 1, ***dadurch gekennzeichnet, dass*** die Rotorabschnitte (11 und 12) des Rotors (1) Längsnuten für die Käfigrotorwicklungen mit einer unterschiedlichen Anzahl und einem unterschiedlichen Profil für jeden Abschnitt haben.

## Revendications

1. Moteur électrique à induction avec rotor coulissant multi-profil et multi-section comportant un carter (4), à l'une de ses extrémités est monté un bouclier frontal (8), et à l'autre extrémité il y a un bouclier postérieur (9) et un dispositif de freinage (5) comprenant au moins un frein avec élément de friction (51) et un bouclier de frein (52), dans le carter étant monté un stator (2) avec enroulement (6), à l'intérieur duquel est monté un rotor à cage d'écureuil (1) avec un arbre (3) et roulements à bagues montés autour de l'arbre (23), situé à l'intérieur des roulements à bagues, l'arbre (3) du rotor (1) est campé à l'intérieur des roulements à bagues (23) avec la possibilité de déplacement axial de l'arbre avec le rotor (1) à l'égard du stator (2), lors de quoi le rotor (1) est lié à l'une de ses extrémité avec le dispositif de freinage (5) ; le rotor (1) comprend deux sections rotatives ou plus disposées longitudinalement dont au moins une est conique (11), à un petit diamètre du cône dirigé vers le bouclier frontal, et au moins une des sections du rotor étant cylindrique (12), tandis que le stator (2) est de forme partiellement conique et comporte également deux sections ou plus (21, 22), correspondant au nombre, à la forme et à la position des sections (11, 12) du rotor (1), dans lequel l'enroulement (6) du stator (2) est commun à toutes ses sections (21, 22) et il est multi-profil, correspondant au profile du stator (2).

2. Moteur électrique, selon la revendication 1, **caractérisé en ce que** le dispositif de freinage (5) est fixé à l'une des extrémités de l'arbre (3) et est adapté pour être actionné par un ressort (7) installé autour l'autre extrémité de l'arbre (3) du rotor (1) et appuyé frontalement sur un côté de la section conique (11) du rotor (1) et avec l'autre côté est appuyé à un roulement axial (24), situé à l'intérieur du bouclier frontal (8), et le roulement axial (24) est adapté à limiter le mouvement axial de l'arbre (3) du rotor (1).

3. Moteur électrique, selon la revendication 1, **caractérisé en ce que** les sections rotatives (11 et 12) du rotor (1) ont des canaux longitudinaux pour les enroulements du rotor à cage d'écureuil avec différents nombres et profiles pour chaque section.
